# EUROPEAN PATENT APPLICATION

(11) **EP 4 206 758 A1**
(43) Date of publication of application: **05.07.2023**
(21) Application number: 21861745.4
(22) Date of filing: 30.08.2021
(51) Int. Cl.: G02B 5/23, G02B 1/04, G02C 7/10

(54) **POLYMERIZABLE COMPOSITION FOR OPTICAL MATERIALS, AND PHOTOCHROMIC LENS**

(30) Priority: 31.08.2020 JP 2020145860
(71) Applicant: Mitsui Chemicals, Inc., Tokyo 104-0028 (JP)
(72) Inventor: KADOWAKI Shinichiro, Omuta-shi, Fukuoka 836-8610 (JP); KAWATO Nobuo, Omuta-shi, Fukuoka 836-8610 (JP)
(74) Representative: Mewburn Ellis LLP
(86) International application number: PCT/JP2021/031673
(87) International publication number: WO 2022/045324

(57) **Abstract**

A polymerizable composition for an optical material according to the present invention includes a photochromic composition (A), and a polymerizable composition (B) including a bi- or higher functional iso (thio) cyanate compound and a bi- or higher functional active hydrogen compound, in which the photochromic composition (A) is a composition including at least three types of photochromic compounds (i) to (iii), the photochromic compound (i) has a structure including a chromophore a and a monovalent or a divalent organic group including one or more types of a polysiloxane chain or a polyoxyalkylene chain, the photochromic compound (ii) has the chromophore a (which is not the photochromic compound (i)), and the photochromic compound (iii) has a chromophore b different from the chromophore a.

## Description

### TECHNICAL FIELD

The present invention relates to a polymerizable composition for an optical material including a photochromic composition and a photochromic lens.

### BACKGROUND ART

Plastic lenses are lighter and more difficult to break than inorganic lenses and are able to be dyed and are thus rapidly becoming widespread as optical materials for eyeglass lenses, camera lenses, and the like. So far, various molded products for lenses have been developed and used.

Representative examples thereof include allyl resins obtained from diethylene glycol bis-allyl carbonate and diarylisophthalate, (meth)acrylic resins obtained from (meth)acrylate, and polythiourethane resins obtained from polyisocyanate and polythiols.

In recent years, plastic lenses to which various functions are imparted have been developed.

For example, the development of plastic lenses for eyeglasses having a photochromic performance is advancing. Eyeglasses having a photochromic performance are eyeglasses that function indoors as colorless, transparent eyeglasses and exhibit a function outdoors of protecting the eyes from glare due to the lenses reacting to sunlight (ultraviolet rays) and turning gray, brown, or the like. The above are highly functional eyeglasses for both indoor and outdoor use and the demand for these eyeglasses has increased in recent years.

Examples of such photochromic lens materials include the techniques described in Patent Documents 1 to 6.

Patent Document 1 discloses that it is possible to provide a photochromic lens for eyeglasses with a high refractive index and excellent photochromic properties by radical polymerization of a polymerizable composition in which a photochromic compound is dissolved in a monomer mixture including (meth)acrylic acid ester of a specific structure and divinylbenzene by a casting polymerization method.

Patent Document 2 discloses that it is possible to provide photochromic optical materials having various physical properties such as low specific gravity and impact resistance as well as having photochromic properties with fast light responsiveness by radical polymerization of a composition including a photochromic compound and a polymerizable monomer having a di (meth)acrylic group by a casting polymerization method. In addition, it is disclosed that it is possible to provide a photochromic optical material with a high refractive index by curing a composition including a photochromic compound, a polyol or polythiol, and a polymerizable monomer having a polyisocyanate and a di(meth)acrylic group.

Patent Document 3 discloses that it is possible to provide a fluorene acrylic-based photochromic optical material with excellent photo discoloration performance and optical properties while having a high refractive index by radical polymerization of a polymerizable composition for an optical material including a photochromic compound and a fluorene acrylate compound by a casting polymerization method.

Patent Document 4 describes a lens formed of a composition including a predetermined photochromic compound and a di(meth)acrylate compound.

Patent Document 5 discloses a lens in which a coating layer formed of a composition including a photochromic compound having a chromene skeleton and a phenol compound is provided on the surface of a thiourethane-based plastic lens.

Patent Document 6 discloses a photochromic lens having a lens base material formed of a thiourethane resin and a photochromic film formed by coating a solution including a photochromic compound and a radical polymerizable monomer on the base material.

Patent Document 7 discloses a method for making color deviation in a darkening and a fading process in a pigment-mixing system less noticeable by pre-coloring a photochromic lens.

Patent Document 8 discloses a method for making color deviation in a darkening and a fading process less noticeable by adding, to a pigment with a fast-darkening speed and fading speed, a slow pigment.

### RELATED DOCUMENT

### PATENT DOCUMENTS

[Patent Document 1] International Publication No. 2012/141306
[Patent Document 2] Japanese Laid-open patent publication No. 2004-78052
[Patent Document 3] International Publication No. 2014/208994
[Patent Document 4] Japanese Laid-open patent publication No. H8-272036
[Patent Document 5] Japanese Laid-open patent publication No. 2005-23238
[Patent Document 6] Japanese Laid-open patent publication No. 2008-30439
[Patent document 7] Japanese Laid-open patent publication No. H7-43525
[Patent document 8] Japanese Laid-open patent publication No. 2002-6272

### SUMMARY OF THE INVENTION

### TECHNICAL PROBLEM

In a case of assuming an optical material including a large number of types of photochromic pigments, when the darkening speed and the fading speed of each pigment (referred to below as the "darkening and fading speeds") are identical, the color tone of the lens exhibited in the darkening process and fading process (referred to below as the "darkening and fading processes") changes while always maintaining the desired gray or brown color. However, since the darkening and fading speeds of pigments also depend greatly on the molecular structures thereof, when a large number of types of pigments with different molecular structures are mixed, the darkening and fading speeds of each pigment will usually not be identical.

If the darkening and fading speeds of each pigment are different, the color tone of the darkening and fading processes will not be constant, but will change over time to draw a specific curve on the color coordinates and, usually, the curves of the darkening process and fading process will not be identical. In the darkening process, the color development of the pigment with a fast darkening speed appears first and then the color development of the pigment with a slow darkening speed gradually catches up, thus, the darkening process advances via the color tone of the pigment with a fast darkening speed to a mixed color tone. On the other hand, in the fading process, in contrast, the pigment with a fast fading speed is color-erased first and the influence of the pigment with a slow fading speed remains strong, thus, the fading process advances via the color tone of the pigment with a slow fading speed.

In this manner, in a mixing system of a pigment with a fast darkening speed or fading speed and a pigment for which the above speeds are slow, the color tone change in the darkening process and the fading process generally takes place while drawing a loop on the color coordinates. In addition, it is also known that this color tone change is strongly influenced by the conditions of the light that causes the color development of the optical material and the environmental temperature. Accordingly, for example, in a case where such photochromic optical materials are applied to lenses for eyeglasses used in a wide variety of environments, it is expected that there will be a temporary change to a color tone unintended by the wearer that deviates significantly from gray or brown, causing color deviation in the darkening and fading processes and there is a desire for improvement in this point. Patent Documents 7 and 8 are one attempt to solve the problems described above, but are insufficient to prevent color deviation from occurring.

### SOLUTION TO PROBLEM

As a result of intensive investigation in consideration of the techniques of the related art, the present inventors found that, when using a combination of photochromic compounds having a specific structure, it is possible to change the color tone exhibited during the darkening process and the fading process while always maintaining the desired color tone, thereby eliminating the color deviation problem and completing the invention.

That is, it is possible to describe the present invention as follows.
[1] A polymerizable composition for an optical material including a photochromic composition (A), and a polymerizable composition (B) including a bi- or higher functional iso(thio)cyanate compound and a bi- or higher functional active hydrogen compound, in which the photochromic composition (A) is a composition including at least three types of photochromic compounds (i) to (iii), the photochromic compound (i) has a structure including a chromophore a and a monovalent or a divalent organic group including one or more types of a polysiloxane chain or a polyoxyalkylene chain, the photochromic compound (ii) has the chromophore a (which is not the photochromic compound (i)), and the photochromic compound (iii) has a chromophore b different from the chromophore a.
[2] The polymerizable composition for an optical material according to [1], in which the photochromic compound (ii) and/or the photochromic compound (iii) further has a structure including a monovalent or a divalent organic group including one or more types of a polysiloxane chain or a polyoxyalkylene chain.
[3] The polymerizable composition for an optical material according to [1] or [2], in which the photochromic compounds (i) to (iii) are one or two or more types of compounds selected from compounds represented by General Formula (a), the photochromic compound (i) is a compound in which a and b are 1 in General Formula (a), and the photochromic compound (ii) or the photochromic compound (iii) is a compound in which a and b are both 0 or 1 in General Formula (a).

   (Chain)a-[(L)b-(PC1)]c (a)

   (In General Formula (a), a and b are both 0 or 1. c is equal to the number of bonding sites of Chain. PC1 indicates a chromophore derived from any compound of General Formulae (c) to (f) . 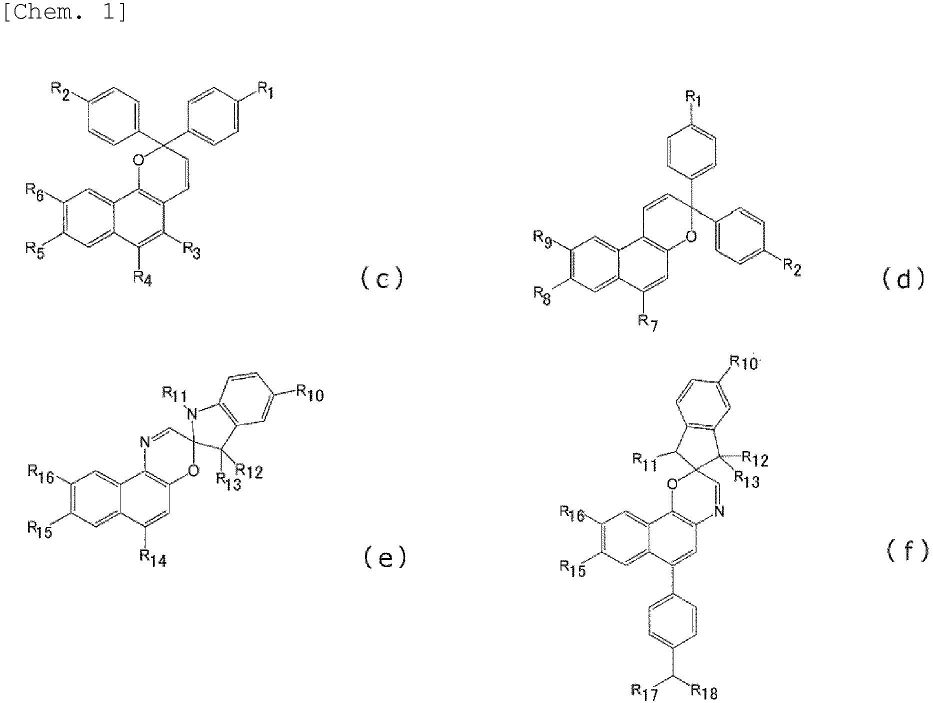
   (In General Formulae (c) to (f), R¹ to R¹⁸, which may be identical to or different from each other, indicate hydrogen, a halogen atom, a carboxyl group, an acetyl group, a formyl group, an aliphatic group with 1 to 20 carbon atoms which may be substituted, an alicyclic group with 3 to 20 carbon atoms which may be substituted, or an aromatic organic group with 6 to 20 carbon atoms which may be substituted. These aliphatic groups, alicyclic groups, or aromatic organic groups may include an oxygen atom and a nitrogen atom. Any one of the groups included in the compounds represented by General Formulae (c) to (f) is bonded to L, which is a divalent organic group. L indicates a divalent organic group including one or more types selected from an oxyethylene chain, an oxypropylene chain, a (thio)ester group, and a (thio)amide group. Chain indicates a monovalent or a divalent organic group including one or more types selected from a polysiloxane chain and a polyoxyalkylene chain.)
[4] The polymerizable composition for an optical material according to any one of [1] to [3], further including a polyether compound (C) with a number-average molecular weight of 100 to 10000.
[5] The polymerizable composition for an optical material according to any one of [1] to [4], in which the bi- or higher functional iso (thio) cyanate compound is at least one type selected from the group consisting of hexamethylene diisocyanate, pentamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, phenylene diisocyanate, and 4,4'-diphenylmethane diisocyanate.
[6] The polymerizable composition for an optical material according to any one of [1] to [5], in which the bi- or higher functional active hydrogen compound is a bi- or higher functional polythiol compound and/or a bi- or higher functional polyol compound.
[7] The polymerizable composition for an optical material according to [6], in which the bi- or higher functional polythiol compound is at least one type selected from the group consisting of pentaerythritol tetrakis(2-mercaptoacetate), pentaerythritol tetrakis(3-mercaptopropionate), bis(2-mercaptoethyl) sulfide, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 2,5-dimercaptomethyl-1,4-dithiane, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, and ethylene glycol bis(3-mercaptopropionate).
[8] A molded product formed by curing the polymerizable composition for an optical material according to any one of [1] to [7].
[9] An optical material including the molded product according to [8].
[10] A photochromic lens consists of the molded product according to [8].
[11] A method for producing a polymerizable composition for an optical material, the method including a step of mixing a photochromic composition (A) and a polymerizable composition (B) including a bi- or higher functional iso(thio) cyanate compound and a bi- or higher functional active hydrogen compound, in which
   the photochromic composition (A) includes
   a photochromic compound (i) having a structure including a chromophore a and a monovalent or a divalent organic group including one or more types of a polysiloxane chain or a polyoxyalkylene chain,
   a photochromic compound (ii) having the chromophore a (which is not the photochromic compound (i)), and
   a photochromic compound (iii) having a chromophore b different from the chromophore a.
[12] The method for producing a polymerizable composition for an optical material according to [11], the method further including a step of adjusting a darkening and erasing speed of a mixture of the photochromic compound (i) and the photochromic compound (ii) and a darkening and erasing speed of the photochromic compound (iii) to be approximately identical, before the mixing step.
[13] The method for producing a polymerizable composition for an optical material according to [12], in which the adjusting step is performed by adjusting a mixing ratio of the mixture of the photochromic compound (i) and the photochromic compound (ii).
[14] A method for suppressing color deviation of a polymerizable composition for an optical material, the composition including
   a photochromic composition (A), and
   a polymerizable composition (B) including a bi- or higher functional iso (thio) cyanate compound and a bi- or higher functional active hydrogen compound, in which
   the photochromic composition (A) is a composition including at least three types of photochromic compounds (i) to (iii),
   the photochromic compound (i) has a structure including a chromophore a and a monovalent or a divalent organic group including one or more types of a polysiloxane chain or a polyoxyalkylene chain,
   the photochromic compound (ii) has the chromophore a (which is not the photochromic compound (i)), and
   the photochromic compound (iii) has a chromophore b different from the chromophore a,
   the method including a step of adjusting a darkening and erasing speed of a mixture of the photochromic compound (i) and the photochromic compound (ii) and a darkening and erasing speed of the photochromic compound (iii) to be approximately identical.

### ADVANTAGEOUS EFFECTS OF INVENTION

According to the present invention, it is possible to provide a polymerizable composition for an optical material in which, even when using a plurality of photochromic compounds in combination, the color tone does not change during darkening and fading processes and with which it is possible to obtain a photochromic lens in which color deviation is suppressed.

### BRIEF DESCRIPTION OF THE DRAWINGS

[Fig. 1] Fig. 1 is a spectrum diagram showing the relationship between the wavelength and transmittance of light at the time of darkening and the relationship between the wavelength and transmittance of light at the time of fading in a lens including Reversacol Wembley Grey and a lens including Reversacol 1920.
[Fig. 2] Fig. 2 is a graph showing the darkening speed and the fading speed of a lens including Reversacol Wembley Grey and a lens including Reversacol 1920.
[Fig. 3] Fig. 3 is a spectrum diagram showing the relationship between the wavelength and transmittance of light at the time of darkening and the relationship between the wavelength and transmittance of light at the time of fading in a lens including Reversacol Heath Green and a lens including Reversacol Wembley Grey.
[Fig. 4] Fig. 4 is a graph showing the darkening speed and the fading speed of a lens including Reversacol Heath Green and a lens including Reversacol Wembley Grey.
[Fig. 5] Fig. 5 is a graph showing the relationship between the amount of Reversacol Wembley Grey in a total of 500 ppm of Reversacol Wembley Grey and Reversacol 1920 and a fading half-life (F1/2).
[Fig. 6] Fig. 6 is a graph showing the color coordinates of the darkening process and the fading process in a mixed composition of photochromic pigments with different chromophores.

### DESCRIPTION OF EMBODIMENTS

A description will be given, based on embodiments, of the polymerizable composition for an optical material including the photochromic composition of the present invention, as well as a molded product obtained from the polymerizable composition and applications thereof. In the present embodiment, the photochromic composition is the same as a photochromic pigment.

The polymerizable composition for an optical material according to the present embodiment includes a photochromic composition (A) and a polymerizable composition (B) including a bi- or higher functional iso (thio) cyanate compound and a bi- or higher functional active hydrogen compound.

A description will be given below of each component.

### <Photochromic Composition (A)>

The photochromic composition (A) of the present embodiment is a composition including at least three types of photochromic compounds (i) to (iii).

The photochromic compound (i) has a structure including a chromophore a and a monovalent or a divalent organic group including one or more types of a polysiloxane chain or a polyoxyalkylene chain.

The photochromic compound (ii) has the chromophore a (which is not the photochromic compound (i)).

The photochromic compound (iii) has a chromophore b different from the chromophore a.

The photochromic composition in the present embodiment is formed of photochromic compounds and may also be referred to as a photochromic pigment.

In addition, the chromophores in the present embodiment are intended to mean structures that contribute to the color tone of the photochromic compound.

In the present embodiment, the photochromic compound (i) and the photochromic compound (ii) have identical chromophores a in the structures thereof and thus are able to exhibit identical color tones. Therefore, with the photochromic composition (A) of the present embodiment, it is possible to maintain the darkening and fading color tones even when the photochromic compound (i) and the photochromic compound (ii) are mixed and to adjust the darkening and fading speeds by controlling the combination of photochromic compounds (i) and (ii) . Therefore, by matching the darkening and fading speeds of photochromic compound (i) and photochromic compound (ii) to the darkening and fading speed of photochromic compound (iii) having a chromophore b different from chromophore a, the change, to unintended color tone, of the photochromic composition (A) as a whole is suppressed in the darkening and fading processes, in particular, in the fading process, and it is possible to reduce color deviation.

In other words, the photochromic composition (A) of the present embodiment is formed such that the darkening and erasing speed of the photochromic compound (i) and the photochromic compound (ii) and the darkening and erasing speed of the photochromic compound (iii) are approximately identical.

In the present embodiment, specifically, changing the mixing ratio of photochromic compound (i) and photochromic compound (ii) makes it possible to adjust the darkening and fading speed and to match the darkening and fading speed of the photochromic compound (iii) .

In addition, it is also possible to perform the adjustment of the darkening and fading speed by selecting the length and type of Chain described below according to the type and combination of the chromophores of the photochromic compounds (i) to (iii).

In the present embodiment, it is also preferable that the photochromic compound (ii) and/or the photochromic compound (iii) further has a structure including a monovalent or a divalent organic group including one or more types of a polysiloxane chain or a polyoxyalkylene chain.

In the present embodiment, it is possible to use the photochromic compounds without being particularly limited as long as a chromophore and, as necessary, a predetermined organic group, are provided therein and it is possible to achieve the effects of the present invention.

In the present embodiment, the photochromic compounds (i) to (iii) are preferably one or two or more types of compounds selected from compounds represented by General Formula (a), for example. Specifically, it is more preferable that the photochromic compound (i) is a compound in which a and b are 1 in General Formula (a) and that the photochromic compound (ii) or the photochromic compound (iii) is a compound in which a and b are both 0 or 1 in General Formula (a) .

(Chain)a-[(L)b-(PC1)]c (a)

In General Formula (a), a and b are both 0 or 1. c is equal to the number of bonding sites of Chain. The number of bonding sites of Chain is 1 or 2.

PC1 indicates a chromophore derived from any compound of General Formulae (c) to (f) .

In the present embodiment, an "identical chromophore" means a chromophore in which, in the structure represented by any of General Formulae (c) to (f), the substituent group is also identical. Accordingly, in chromophores derived from compounds of the same General Formula, different chromophores are included for each substituent group.

That is, photochromic compound (i) and photochromic compound (ii) have identical chromophores a, but, in General Formula (a), the presence or absence of Chain or L and the structures thereof are at least different.

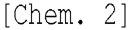

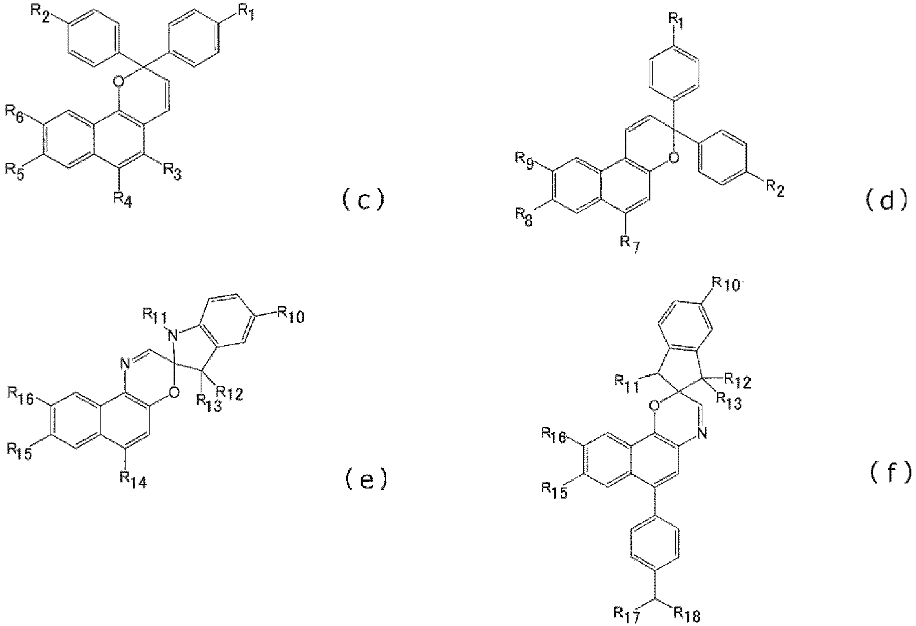

In General Formulae (c) to (f), R¹ to R¹⁸, which may be identical to or different from each other, indicate hydrogen, a halogen atom, a carboxyl group, an acetyl group, a formyl group, a C1 to C20 aliphatic group which may be substituted, a C3 to C20 alicyclic group which may be substituted, or a C6 to C20 aromatic organic group which may be substituted. These aliphatic groups, alicyclic groups, or aromatic organic groups may include an oxygen atom and a nitrogen atom. Any one of the groups included in the compounds represented by General Formulae (c) to (f) is bonded to L, which is a divalent organic group. Here, the "C" indicates the number of carbon atoms.

Examples of the C1 to C20 aliphatic groups which may be substituted include linear or branched-chain C1 to C10 alkyl groups, linear or branched-chain C1 to C10 alkoxy groups, linear or branched-chain C2 to C10 alkenyl groups, C1 to C10 hydroxyalkyl groups, C1 to C10 hydroxyalkoxy groups, C1 to C10 alkyl groups substituted with C1 to C10 alkoxy groups, C1 to C10 alkoxy groups substituted with C1 to C10 alkoxy groups, C1 to C5 haloalkyl groups, C1 to C5 dihaloalkyl groups, C1 to C5 trihaloalkyl groups, C1 to C10 alkylamino groups, C1 to C10 amino alkyl groups, linear or branched-chain C1 to C20 alkoxycarbonyl groups, and the like.

Examples of C3 to C20 alicyclic groups which may be substituted include C3 to C20 cycloalkyl groups, C6 to C20 bicycloalkyl groups, and the like.

Examples of C6 to C20 aromatic organic groups which may be substituted include phenyl groups, C7 to C16 alkoxyphenyl groups, arylamino groups, diarylamino groups, aryl C1 to C5 alkylamino groups, cyclic amino groups, arylcarbonyl groups, aroyl groups, and the like.

Preferable examples of R¹ and R² include a hydrogen atom; a halogen atom; C1 to C20 aliphatic groups which may be substituted such as linear or branched-chain C1 to C10 alkyl groups, linear or branched-chain C1 to C10 alkoxy groups, C1 to C10 hydroxyalkoxy groups, C1 to C10 alkoxy groups substituted with C1 to C10 alkoxy groups, C1 to C5 haloalkyl groups, C1 to C5 dihaloalkyl groups, C1 to C5 trihaloalkyl groups, and C1 to C5 alkylamino groups; C6 to C20 aromatic organic groups which may be substituted such as phenyl groups, C7 to C16 alkoxyphenyl groups, C1 to C5 dialkylamino groups, arylamino groups, diarylamino groups, aryl C1 to C5 alkylamino groups, and cyclic amino groups; and the like. R¹ and R² may be identical or different from each other.

Preferable examples of R³ include a hydrogen atom; a halogen atom; a carboxyl group; an acetyl group; C1 to C20 aliphatic groups which may be substituted such as linear or branched-chain C1 to C10 alkyl groups, linear or branched-chain C2 to C10 alkenyl groups, linear or branched-chain C1 to C10 alkoxy groups, C1 to C10 hydroxyalkyl groups, C1 to C10 alkyl groups substituted with C1 to C10 alkoxy groups, C1 to C10 aminoalkyl groups, and linear or branched-chain C1 to C20 alkoxycarbonyl groups; C3 to C20 alicyclic groups which may be substituted such as C3 to C20 cycloalkyl groups, and C6 to C20 bicycloalkyl groups; C6 to C20 aromatic organic groups which may be substituted such as an arylcarbonyl group, a formyl group, and an aroyl group; and the like.

Preferable examples of R⁴ include a hydrogen atom; a halogen atom; a carboxyl group; an acetyl group; a formyl group;

C1 to C20 aliphatic groups which may be substituted such as linear or branched-chain C1 to C10 alkyl groups, linear or branched-chain C2 to C10 alkenyl groups, linear or branched-chain C1 to C10 alkoxy groups, C1 to C10 hydroxyalkyl groups, C1 to C10 alkyl groups substituted with C1 to C10 alkoxy groups, C1 to C10 aminoalkyl groups, and linear or branched-chain C1 to C20 alkoxycarbonyl groups;

C3 to C20 alicyclic groups which may be substituted, such as C3 to C20 cycloalkyl groups, and C6 to C20 bicycloalkyl groups;

C6 to C20 aromatic organic groups which may be substituted, such as an arylcarbonyl group, an aroyl group, a phenyl group, C7 to C16 alkoxyphenyl groups, C1 to C10 dialkoxyphenyl groups, C1 to C10 alkyl phenyl groups, and C1 to C10 dialkyl phenyl groups; and the like.

R³ and R⁴ may be bonded to each other. In a case where R³ and R⁴ are bonded to each other to form a ring structure, examples thereof include General Formula (g) or (h). The dotted portion represents the bond between the carbon atom to which R³ is bonded and the carbon atom to which R⁴ is bonded.

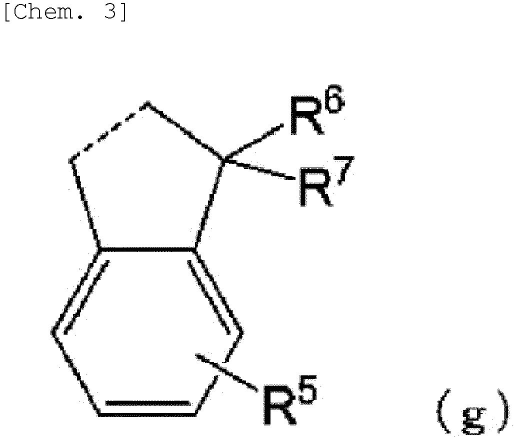

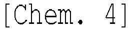

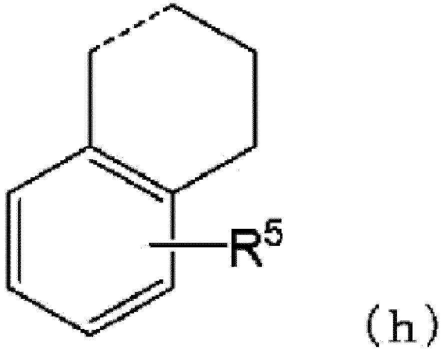

R⁵, R⁶, R⁷, R⁸, R⁹, R¹⁰, R¹⁴, R¹⁵, and R¹⁶ indicate the same functional groups as R¹ and R². The plurality of R⁵ to R⁷ present may be identical or different.

Preferable examples of R¹¹ include a hydrogen atom; a halogen atom; C1 to C20 aliphatic groups which may be substituted such as linear or branched-chain C1 to C20 alkyl groups, C1 to C5 haloalkyl groups, C1 to C5 dihaloalkyl groups, and C1 to C5 trihaloalkyl groups; C3 to C20 alicyclic groups which may be substituted such as C3 to C20 cycloalkyl groups, C6 to C20 bicycloalkyl groups, C3 to C20 cycloalkyl groups substituted with C1 to C5 alkyl groups, and C6 to C20 bicycloalkyl groups substituted with C1 to C5 alkyl groups; C6 to C20 aromatic organic groups which may be substituted such as aryl groups substituted with C1 to C5 alkyl groups; and the like.

Preferable examples of R¹² and R¹³ include a hydrogen atom; a halogen atom; C1 to C20 aliphatic groups which may be substituted such as C1 to C10 alkyl groups and C1 to C5 alkylalkoxycarbonyl groups; C3 to C20 alicyclic groups which may be substituted such as C5 to C7 cycloalkyl groups; and the like.

Preferable examples of R¹⁷ and R¹⁸ include a hydrogen atom; a halogen atom; C1 to C20 aliphatic groups which may be substituted such as linear or branched-chain C1 to C10 alkyl groups and C1 to C10 hydroxyalkyl groups; C3 to C20 alicyclic groups which may be substituted such as C5 to C7 cycloalkyl groups; and the like.

L of General Formula (a) indicates a divalent organic group including at least one type of group selected from an oxyethylene chain, an oxypropylene chain, a (thio) ester group, and a (thio)amide group.

Specifically, L is represented by General Formulae (i) to (o).

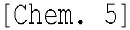

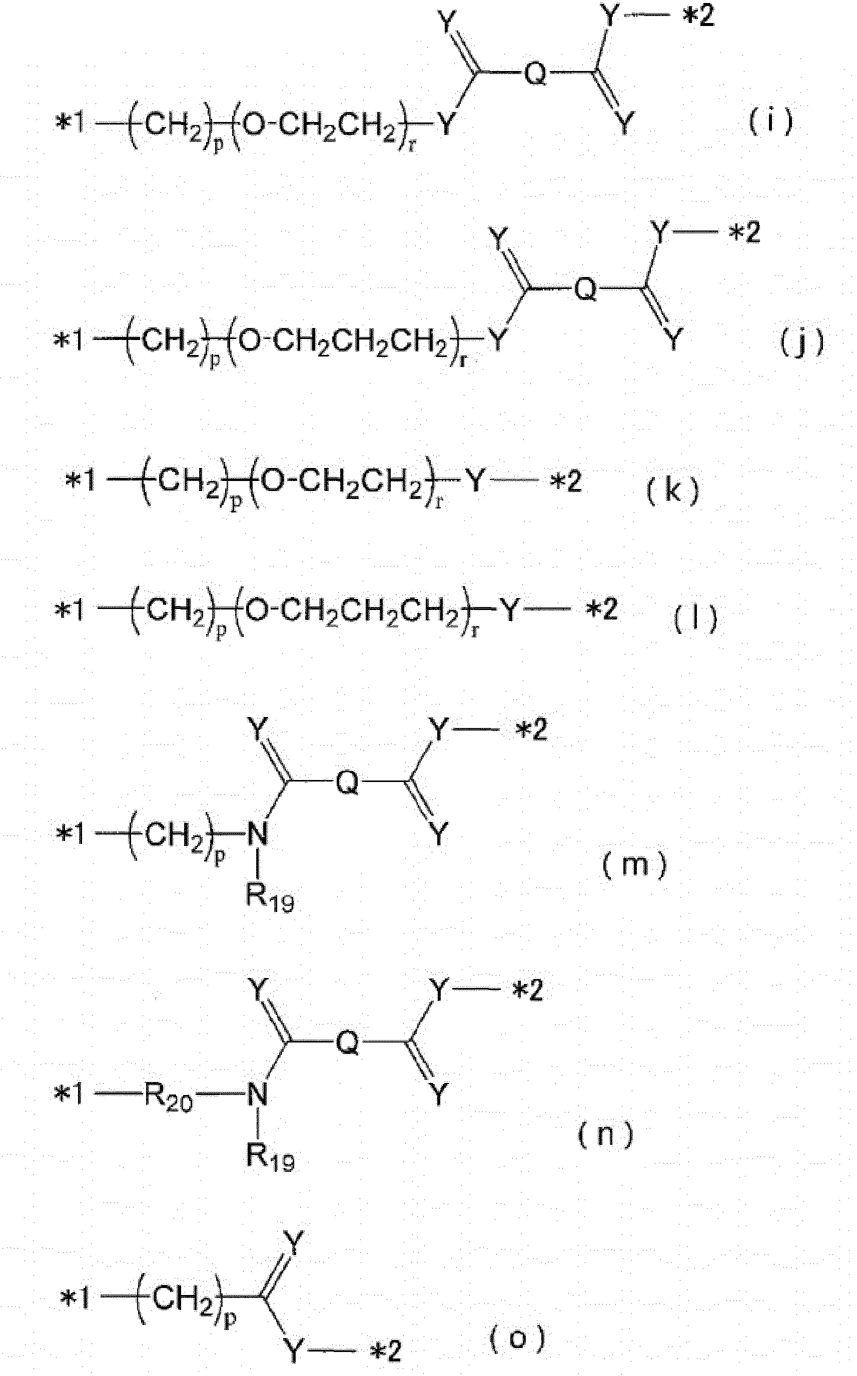

In General Formulae (i) to (o), Y indicates oxygen or sulfur. R¹⁹ indicates hydrogen or a linear or branched-chain C1 to C10 alkyl group. R²⁰ indicates a linear or branched-chain C1 to C10 alkylene group. p indicates an integer from 0 to 15 and r indicates an integer from 0 to 10.

Q indicates a linear or branched-chain C1 to C10 alkylene group, a C1 to C10 alkenylene group, a divalent group derived from a 1,2-, 1,3-, 1,4-position-substituted aryl group, a divalent group derived from a substituted heteroaryl group, and the like. *1 and *2 represent bonding sites, where *1 is bonded to a monovalent or a divalent organic group represented by "Chain" and *2 is bonded to a monovalent organic group represented by PC.

"Chain" in General Formula (a) indicates a monovalent or a divalent organic group including one or more types selected from a polysiloxane chain and a polyoxyalkylene chain.

Examples of polysiloxane chains include polydimethylsiloxane chains, polymethylphenylsiloxane chains, polymethylhydrosiloxane chains, and the like.

Examples of polyoxyalkylene chains include polyoxyethylene chains, polyoxypropylene chains, polyoxyhexamethylene chains, and the like.

Specifically,
"Chain" indicates a monovalent organic group of General Formula (p) or (q), or a divalent organic group of General Formula (r) or (s) .

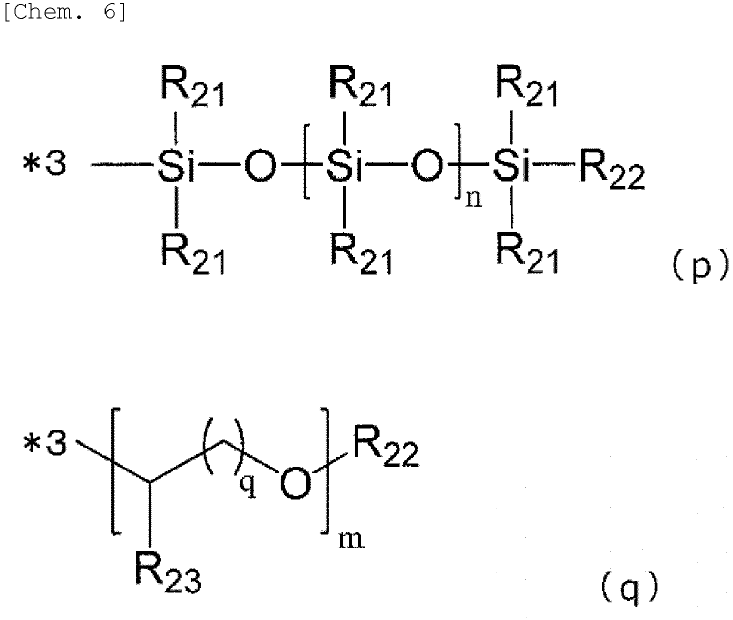

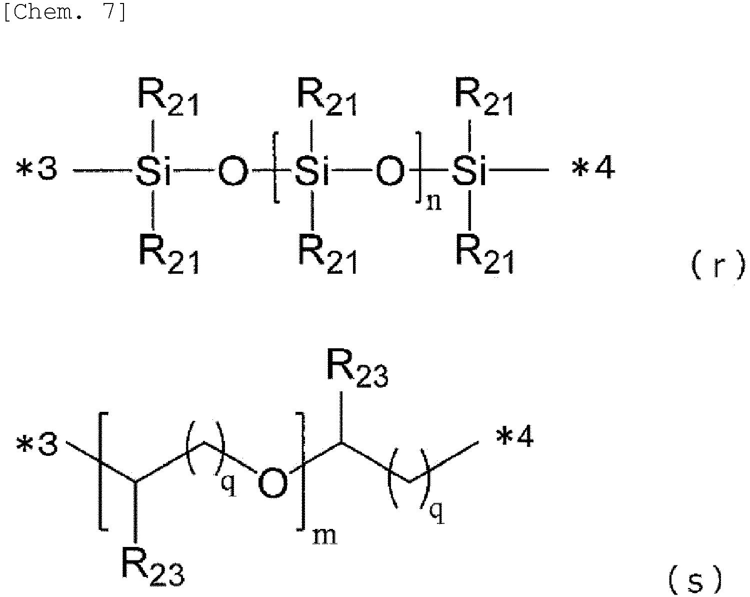

In General Formulae (p) to (s), R²¹ indicates a linear or branched-chain C1 to C10 alkyl group. R²² indicates a linear or branched-chain C1 to C10 alkyl group. R²³ indicates hydrogen, a methyl group, or an ethyl group. n indicates an integer of 4 to 75, and m indicates an integer of 1 to 50. q indicates an integer of 1 to 3. *3 and *4 represent bonding sites.

The photochromic compounds of the present embodiment are obtained by the methods described in International Publication No. 2009/146509, International Publication No. 2010/20770, International Publication No. 2012/149599, and International Publication No. 2012/162725.

Examples of the photochromic compound of the present embodiment include Reversacol Humber Blue (polydimethylsiloxane chain, naphthopyran-based chromophore (General Formula c)), Reversacol Calder Blue (polydimethylsiloxane chain, naphthopyran-based chromophore (General Formula c)), Reversacol Trent Blue (polydimethylsiloxane chain, naphthopyran-based chromophore (General Formula c)), Reversacol Pennine Green (polydimethylsiloxane chain, naphthopyran-based chromophore (General Formula c)), Reversacol Heath Green (polyoxyalkylene chain, naphthopyran-based chromophore (General Formula c)), Reversacol Chilli Red (polydimethylsiloxane chain, naphthopyran-based chromophore (General Formula c)), Reversacol Wembley Grey (polyoxyalkylene chain, naphthopyran-based chromophore (General Formula c)), Reversacol Cayenne Red (polyoxyalkylene chain, naphthopyran-based chromophore (General Formula c)), and the like by Vivimed and it is possible to use one or two or more types thereof in combination.

In addition, examples of combinations of the photochromic compounds (i) and (ii) to control the darkening and fading speeds in the present embodiment include combinations of Reversacol Wembley Grey and Reversacol 1920 in which the structure of the chromophore in the compound is identical (both are naphthopyran-based chromophores (General Formula c), combinations with and without "Chain"), or combinations of Reversacol Heath Green and Reversacol Botany Green (both are naphthopyran-based chromophores (General Formula c), combinations with and without "Chain"), and the like.

In the present embodiment, a "different chromophore" means a chromophore represented by a different General Formula selected from General Formulae (c) to (f), or a chromophore with a different substituent group in the structure represented by any of General Formulae (c) to (f). That is, even if the structure is represented by the same General Formula, the chromophore will be different if the substituent group is different.

In the present embodiment, the darkening and erasing speeds being approximately identical is intended to mean that the darkening and erasing speeds of different photochromic compounds are approximate to the extent that no color deviation is perceived in the polymerizable composition for an optical material and is not limited to meaning that the darkening and erasing speeds are perfectly matched. Shifting in the fading half-lives is allowed in a range in which color tone changes during the darkening and fading processes are suppressed to the extent of being not visually apparent.

Specifically, as an example of an index of darkening and fading speeds, in a case where the fading half-life is set as the time required for absorbance to recover to the middle (50%) of the absorbance at the time of darkening and time of fading as a reference, it is possible to set the difference between the individual fading half-lives and the average value calculated from a plurality of fading half-lives to a range of ±30%, preferably ±20%, and more preferably ±10%. Within this range, it is possible to suppress color deviation by adjusting the composition to suit the purpose, such as by increasing the added amount of a photochromic compound with a short fading half-life to set the darkening and fading speed to be faster.

In addition, as an index of the darkening and fading speed, in addition to the fading half-life described above, for example, it is also possible to use the time required for recovery at other ratios, such as 60% or 80%, with the absorbance (or transmittance) at the time of darkening and the time of fading as a reference. In addition, it is also possible to use a method using only the absorbance at the time of darkening as a reference. Furthermore, it is also possible to provide an arbitrary reference and use the time to recover to a specific absorbance or light transmittance, regardless of the absorbance or light transmittance at the time of darkening and the time of fading.

That is, the index of the darkening and fading speeds in the present embodiment is not limited to the fading half-life and it is possible to use numerical values obtained by various methods as an index.

In addition, the light that color-develops the photochromic compound is not particularly limited and may be either sunlight or an artificial light source and may be direct light or indirect light. Among the above, from the viewpoint of exhibiting the color deviation suppression effect of the polymerizable composition for an optical material according to the present embodiment, suitable examples thereof include sunlight, especially sunlight in the summer daytime or the like, or a D65 light source.

When the photochromic compound has a chromophore (PC) with an identical structure, the color tone at the time of darkening is approximately identical due to the addition of other structures (for example, Chain), and the like, but the darkening and fading speeds are faster. It is possible to control the darkening and fading speeds by mixing photochromic compounds with different structures having identical chromophores with each other, in specific ratios.

The photochromic composition (A) of the present embodiment is obtained by mixing the photochromic compounds (i) to (iii) using a known method. In addition, the mixing step may include a step of measuring each of the darkening and erasing speeds of the photochromic compound (i), the photochromic compound (ii), and the photochromic compound (iii), and a step of adjusting the darkening and erasing speeds of the mixture of the photochromic compound (i) and the photochromic compound (ii) to be approximately identical to the darkening and erasing speed of the photochromic compound (iii).

Specifically, for example, the fading half-life measured under the following conditions may be set as an index of the darkening and erasing speed and the mixing ratio of the photochromic compounds (i) and (ii) may be adjusted such that the fading half-life is adjusted to be approximately identical.

### (Fading Half-Life Measurement Conditions)

Using a xenon lamp light source apparatus, a 2.0 mm-thick resin molded product sample including 500 ppm of a photochromic compound is irradiated and color-developed for 15 minutes under conditions of a temperature of 23°C and an illuminance of 50,000 lux and the time required for the absorbance at λmax of the continuously measured spectrum during this time to return to the mid-value of absorbance before and after darkening is set as the fading half-life.

For photochromic compounds having chromophores (PC) with identical structures, the color tone at the time of darkening is approximately identical. Therefore, the color tone of the photochromic composition (A) is adjusted by selecting photochromic compounds (i) and (ii) that have identical chromophores in the structure thereof and carrying out mixing with the photochromic compound (iii) to achieve the desired color tone. At this time, since the color tone does not change even when the mixing ratio of photochromic compounds (i) and (ii) is adjusted, it is possible to suppress color deviation in the photochromic composition (A) by adjusting the mixing ratio such that the fading half-life of the mixture of photochromic compounds (i) and (ii) is approximately identical to the fading half-life of the photochromic compound (iii) .

In addition, the fading half-life being approximately identical is intended to mean that no change in color tone is perceived when the composition including the photochromic composition (A) and the molded product thereof are observed over time. The photochromic composition (A) of the present embodiment is a composition in which, after the photochromic composition (A) is color-developed by being irradiated with a light source, no color deviation from the developed color is observed either in the fading process or after the fading.

It is possible to mix at least two types of photochromic compounds having identical chromophores in the structures thereof at a mixing ratio so as to achieve a target darkening and fading speed (specifically, fading half-life) and to obtain a photochromic compound with an adjusted fading half-life. For example, a calibration curve is created which indicates the fading half-life in a case where two types of photochromic compounds are mixed at a predetermined ratio and the mixing ratio of the two types of photochromic compounds is calculated from the target fading half-life. By mixing at the calculated mixing ratio, it is possible to obtain a photochromic compound with an adjusted fading half-life.

In the present embodiment, a description was given of an example of obtaining a photochromic composition by mixing photochromic compounds (i), (ii) and (iii); however, the example may be a set (aggregate) of photochromic compounds in which these photochromic compounds are combined in a predetermined ratio without mixing these photochromic compounds.

The photochromic composition of the present embodiment includes, as another aspect,
a group (photochromic composition) including one or two or more types of photochromic compounds having identical chromophores in the structure thereof, and
at least one group (photochromic composition) formed of two or more types of photochromic compounds having identical chromophores in the structure thereof for each of at least one type of chromophore different from the chromophore, in which
the calculated fading half-lives for each of these groups (photochromic compositions) are approximately identical.

Since the fading half-lives of each group of photochromic compounds having identical chromophores in the structure thereof are approximately identical, the photochromic pigment of the present embodiment formed of these groups of photochromic compounds does not change to an unintended color tone in the darkening and fading processes, in particular, in the fading process, and the color tone remains constant and it is thus possible to suppress color deviation.

In the present embodiment, it is possible to illustrate the following specific examples.
(1) An example including a group a including one type of photochromic compound having identical chromophores a in the structure thereof,
   a group b including two or more types of photochromic compounds having identical chromophores b different from chromophore a in the structures thereof, and
   a group c including two or more types of photochromic compounds having identical chromophores c different from chromophores a and b in the structures thereof, in which
   the calculated fading half-lives for each of all of the groups (photochromic compositions) a, b, and c are approximately identical.
(2) An example including a group a including two or more types of photochromic compounds having identical chromophores a in the structures thereof,
   a group b including two or more types of photochromic compounds having identical chromophores b different from chromophore a in the structures thereof, and
   a group c including two or more types of photochromic compounds having identical chromophores c different from chromophores a and b in the structures thereof, in which
   the calculated fading half-lives for each of all of the groups (photochromic compositions) a, b, and c are approximately identical.

In the present embodiment, an example is illustrated in which the number of groups in examples (1) and (2) was set to "3", but it is also possible to increase the number to 4 or more.

Among these examples, the following examples are preferable due to the ease of adjusting the color tone during the darkening and fading processes.
(a) An example including a group a formed of one type of photochromic compound having identical chromophores a in the structure thereof, and
   a group b formed of two or more types of photochromic compounds having identical chromophores b different from chromophore a in the structures thereof, in which
   the calculated fading half-lives of group a and group b are approximately identical.
(b) An example including a group a formed of two or more types of photochromic compounds having identical chromophores a in the structure thereof, and
   a group b formed of two or more types of photochromic compounds having identical chromophores b different from chromophore a in the structures thereof, in which
   the calculated fading half-lives of group a and group b are approximately identical.

In this manner, it is possible to control the darkening and fading speeds by mixing photochromic compounds with different structures having identical chromophores in a specific ratio. In the present embodiment, by setting photochromic compounds having identical chromophores in the structure and for which the color tone is approximately identical as a group (photochromic composition), adjusting the darkening and fading speeds among these compound groups to be approximately identical, and then combining all the compound groups, it is possible to eliminate the differences in the darkening and fading speeds due to differences in the chromophores and thereby maintain a constant color tone during the darkening and fading processes.

For example, in a case where the darkening and fading speed of the photochromic compound having another structure (for example, Chain) in addition to the chromophore (PC) is faster than the darkening and fading speed of the photochromic compound having another chromophore, it is possible to adjust the darkening and fading speeds (specifically, the fading half-lives) to be approximately identical by combining the photochromic compounds in each compound group, and, even in a case where the darkening and fading speed of a photochromic compound that does not have any other structure (for example, Chain) in addition to the chromophore (PC) is slower than the darkening and fading speed of a photochromic compound with another chromophore, it is possible to adjust the darkening and fading speeds (specifically, the fading half-lives) to be approximately identical by combining photochromic compounds in each compound group.

### [Polymerizable Compound (B)]

The polymerizable compound (B) includes a bi- or higher functional iso(thio) cyanate compound, with which it is possible to obtain poly(thio)urethane, and a bi- or higher functional active hydrogen compound.

The bi- or higher functional iso(thio)cyanate compound is a compound having two or more iso(thio)cyanato groups and includes isocyanate compounds and isothiocyanate compounds.

Examples of iso(thio)cyanate compounds include compounds selected from the group consisting of aliphatic polyisocyanate compounds, alicyclic polyisocyanate compounds, aromatic polyisocyanate compounds, heterocyclic polyisocyanate compounds, aliphatic polyisothiocyanate compounds, alicyclic polyisothiocyanate compounds, aromatic polyisothiocyanate compounds, and sulfur-containing heterocyclic polyisothiocyanate compounds. It is possible to use isocyanate compounds and isothiocyanate compounds without particular limitation as long as it is possible to obtain the effects of the present invention and examples thereof include the compounds described in International Publication No. 2018/079829.

In the present embodiment, as iso(thio)cyanate compounds, it is preferable to use at least one type selected from hexamethylene diisocyanate, pentamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, phenylene diisocyanate, and 4,4'-diphenylmethane diisocyanate.

Examples of bi- or higher functional active hydrogen compounds include bi- or higher functional polyol compounds, bi- or higher functional polythiol compounds, and the like, for which use is possible as one type or in a combination of two or more types. Polyol compounds are one or more types of aliphatic or alicyclic alcohols and specific examples thereof include linear or branched-chain aliphatic alcohols, alicyclic alcohols, and alcohols in which ethylene oxide, propylene oxide, or ε-caprolactone is added to the above alcohols, and the like. It is possible to use bi- or higher functional active hydrogen compounds without particular limitation as long as it is possible to obtain the effects of the present invention, and examples thereof include the compounds described in International Publication No. 2018/079829.

In the present embodiment, it is possible to preferably use polythiol compounds having two or more hydroxyl groups as active hydrogen compounds.

In the present embodiment, as polythiol compounds, it is preferable to use at least one type selected from pentaerythritol tetrakis(2-mercaptoacetate), pentaerythritol tetrakis(3-mercaptopropionate), bis(2-mercaptoethyl) sulfide, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 2,5-dimercaptomethyl-1,4-dithiane, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, and ethylene glycol bis(3-mercaptopropionate).

The molar ratio of the mercapto groups and/or hydroxyl groups included in the active hydrogen compound with respect to the iso(thio)cyanato groups included in the iso(thio)cyanate compound is in a range of 0.8 to 1.2, preferably in the range of 0.85 to 1.15, and more preferably in the range of 0.9 to 1.1.

### [Polyether Compound (C)]

The polymerizable composition of the present embodiment preferably includes a polyether compound (C) having a number-average molecular weight of 100 to 10,000. By including the polyether compound (C), it is possible to stably express the darkening and fading effects with the photochromic composition (A). That is, it is considered that, due to the photochromic composition (A) being surrounded by the polyether compound (C), the polyether compound (C) functions as a protective film and facilitates the exhibition of the darkening and fading effects of the photochromic composition (A).

The number-average molecular weight of the polyether compound (C) is preferably 100 to 8,000, more preferably 500 to 5,000, even more preferably 1,000 to 4,000, and particularly preferably 1,500 to 3,500.

In addition, the number-average molecular weight of the polyether compound (C) is preferably 100 or more, more preferably 500 or more, even more preferably 1,000 or more, and particularly preferably 1,500 or more. On the other hand, the number-average molecular weight of the polyether compound (C) is preferably 8,000 or less, more preferably 5,000 or less, even more preferably 4,000 or less, and particularly preferably 3,500 or less.

It is possible to use a polyether compound (C) selected from known compounds having a number-average molecular weight in the range described above in a range in which it is possible to exhibit the effects of the present invention.

The polyether compound (C), for example, is preferably formed of at least one type selected from a compound (c1) represented by General Formula (c1) and a compound (c2) represented by General Formula (c2).

### (Compound (c1))

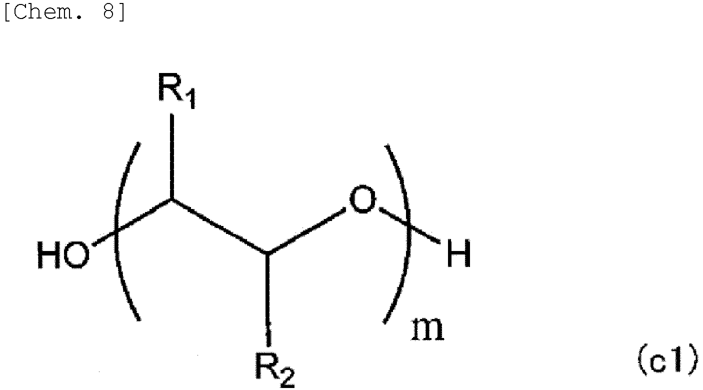

In General Formula (c1), R₁ and R₂ represent hydrogen atoms or alkyl groups with 1 to 18 carbon atoms, at least one of which is a hydrogen atom. The plurality of R₁ present may be identical to or different from each other, and the plurality of R₂ present may be identical to or different from each other, m indicates an integer of 15 or more and 500 or less and preferably 30 or more and 500 or less.

As the compound represented by General Formula (c1), it is possible to use a compound with a number-average molecular weight of 150 or more, and preferably 200 or more.

As the compound (c1), specifically, it is possible to use compounds represented by General Formula (c1-1) and compounds represented by General Formula (c1-2).

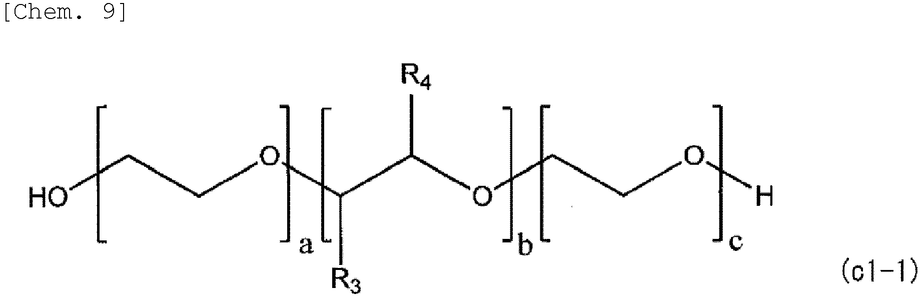

In General Formula (c1-1), and R₄ represent hydrogen atoms or alkyl groups with 1 to 18 carbon atoms, at least one of which is a hydrogen atom. a + c is an integer of 2 or more and 600 or less, preferably 2 or more and 400 or less, and b is an integer of 1 or more and 300 or less, preferably 1 or more and 100 or less. The plurality of R₃ and R₄ present may be identical or different.

Examples of such compounds include the Pluronic (registered trademark) series manufactured by BASF or the like. The structures of the compounds included in Pluronic are shown in Non-Patent Document 1.

The terminal hydroxyl group of the compound represented by General Formula (c1) may react with polymerizable compounds such as isocyanate.

Specific examples of the compound represented by General Formula (c1-1) include the compounds represented by General Formula (c1-1').

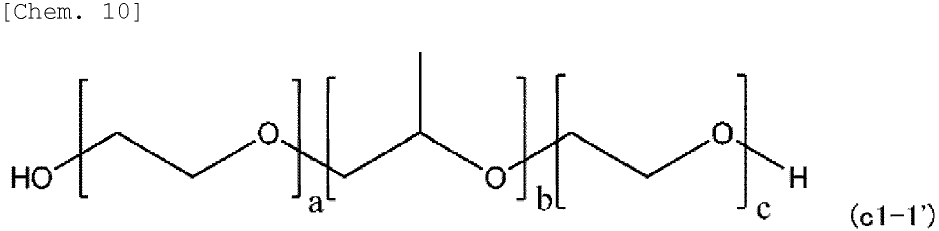

In General Formula (c1-1'), a, b, and c each indicate the number of units and are each independently an integer of 3 or more and 300 or less.

Examples of such compounds include the Pluronic series (manufactured by BASF), and the like.

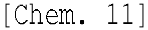

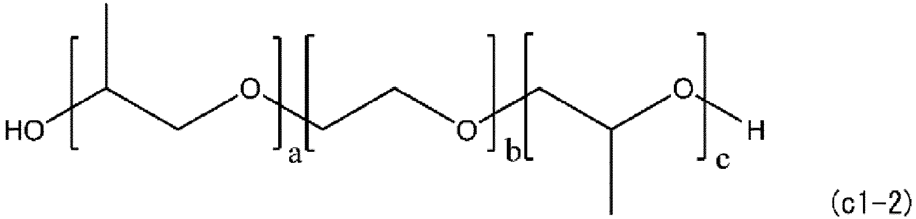

In General Formula (c1-2), a, b, and c each indicate the number of units and are each independently an integer of 3 or more and 300 or less.

Examples of such compounds include Pluronic R series (manufactured by BASF), and the like.

### (Compound (c2))

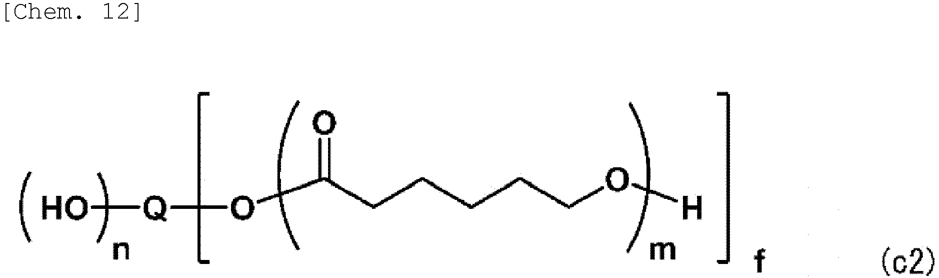

In General Formula (c2), Q represents a (n+f) -valent hydrocarbon group. n indicates an integer of 0 or more, f indicates an integer of 1 or more, and n + f is 3 or more. m indicates an integer from 2 to 58.

In General Formula (c2), the (HO)ₙ-Q-(O)_{f}-group is preferably a trivalent or higher group derived from a polyol having three or more primary hydroxyl groups.

Examples of the compound (c2) include CAPA(R) polycaprolactone polyol (manufactured by Perstorp), PLACCEL(R) (manufactured by Daicel), and the like.

From the viewpoint of a favorable photochromic performance, such as stabilizing or effectively improving the darkening and fading speeds, it is possible to include an amount of 0.01 to 100 parts by weight of the photochromic composition (A) with respect to 100 parts by weight of the polyether compound (C), and 1 to 10 parts by weight is more preferable.

From the viewpoint of the effect of the present invention, it is possible to include an amount of 0.5 to 10% by weight of the polyether compound (C) with respect to 100% by weight of the polymerizable composition for an optical material, preferably 1.0 to 9.0% by weight, and more preferably 2.0 to 8.0% by weight.

The polymerizable composition of the present embodiment may further include, as other components, additives such as internal mold release agents, resin modifiers, light stabilizers, bluing agents, ultraviolet absorbers, antioxidants, coloring inhibitors, dyes, and the like.

That is, in a range in which the effects of the present invention are not impaired, it is possible to add modifiers to the polymerizable composition of the present embodiment for the purpose of adjusting various physical properties such as the optical properties, impact resistance, and specific gravity of the obtained molded product, and adjusting the handling properties of each component of the polymerizable composition.

It is possible to obtain the polymerizable composition for an optical material according to the present embodiment by mixing the components described above with a known method.

It is possible to obtain the polymerizable composition for an optical material according to the present embodiment by mixing the photochromic composition (A), which is a mixture of the photochromic compounds (i), (ii) and (iii), the polymerizable compound (B), and, as necessary, the polyether compound (C) and the other components described above with a known method.

It is possible to obtain the polymerizable composition for an optical material according to the present embodiment, specifically, by mixing the photochromic composition (A), the polymerizable compound (B), and, as necessary, the polyether compound (C) and the other components described above with a known method. In the present embodiment, it is also possible to individually mix the photochromic compounds (i), (ii), and (iii).

In a case where the photochromic composition (A) of the present embodiment is a set of a plurality of photochromic compounds combined to a separately determined mixing ratio, it is possible to obtain the polymerizable composition for an optical material according to the present embodiment by mixing each of the photochromic compounds, the polymerizable compound (B), and, as necessary, the polyether compound (C) and the other components described above with a known method.

Specifically, it is possible to obtain the polymerizable composition by mixing a plurality of photochromic compounds weighed to a separately determined mixing ratio, the polymerizable compound (B), and, as necessary, the polyether compound (C) and the other components described above with a known method.

More specifically, first, the plurality of photochromic compounds are each weighed to a separately determined mixing ratio and then the polymerizable compound (B) is sequentially weighed and added thereto to prepare the polymerizable composition. The above additives to be used as necessary may be dissolved in advance in the polymerizable compound.

The usage amount of the photochromic composition (A) is in a range of 0.0005 parts by weight or more and 5 parts by weight or less with respect to a total of 100 parts by weight of the iso (thio) cyanate compound and active hydrogen compound, which is the polymerizable compound (B), preferably in a range of 0.001 parts by weight or more and 4 parts by weight or less, and more preferably in a range of 0.001 parts by weight or more and 3 parts by weight or less. It is possible to appropriately set these usage amounts according to the type of photochromic compound, the type and usage amount of the polymerizable compound to be used, and the shape of the molded article.

In a case where the polymerizable composition is prepared by mixing the components described above, the temperature is usually 25°C or lower. From the viewpoint of the pot life of the polymerizable composition, an even lower temperature may be preferable. However, in a case where the solubility of the internal mold release agent, additives, and the like in the components described above is not favorable, it is also possible to heat and dissolve the components described above in advance.

It is possible to cure the polymerizable composition for an optical material according to the present embodiment to obtain a molded product. The optical material of the present embodiment is formed of a molded product and examples of the optical material include glass for building materials, glass for cars, photochromic lenses, polarized lenses, and the like.

### [Photochromic Lens]

The photochromic lens of the present embodiment uses a molded product formed by curing the polymerizable composition for an optical material described above. Due to this, for example, using the darkening and fading functions of the polymerizable composition for an optical material, it is possible to obtain a lens that undergoes color-development with black, gray, or brownish colors due to light such as sunlight and obtains light-shielding properties, while being able to undergo fading and maintains a bright field of vision when indoors or the like. In such lenses, the perception of color deviation during the darkening and fading process is suppressed.

In the present embodiment, without being particularly limited thereto, the photochromic lens is obtained by casting polymerization including the steps below as a preferable manufacturing method.
Step a: The polymerizable composition for an optical material according to the present embodiment is cast into a mold.
Step b: The polymerizable composition is heated and the composition is polymerized.

### (Step a)

First, the polymerizable composition is injected into a molding mold (mold) held by a gasket, tape, or the like. At this time, depending on the physical properties desired in the plastic lens to be obtained, it is often preferable to perform a defoaming process under reduced pressure, a filtration process under pressure, reduced pressure, or the like, and the like, as necessary.

### (Step b)

Since conditions vary greatly depending on the composition of the polymerizable composition, the type and usage amount of the catalyst, the shape of the mold, and the like, the polymerization conditions are not limited; however, the polymerization is performed at a temperature of -50°C to 150°C for 1 to 72 hours approximately. In some cases, it is preferable to maintain or gradually increase the temperature in the range of 10°C to 150°C and carry out curing for 1 to 25 hours.

The plastic lens of the present embodiment may be subjected to processing such as annealing as necessary. The processing is usually performed at a temperature of between 50°C to 150°C, but it is preferable to perform the processing at 90°C to 140°C, and 100°C to 130°C is more preferable.

In the present embodiment, when optical materials formed of (thio)urethane resin are molded, various additives such as chain extenders, cross-linking agents, oil-soluble dyes, fillers, and adhesion improvers may be added in addition to the "other components" described above in the same manner as in known molding methods according to the purpose.

It is possible to obtain the polymerizable composition according to the present embodiment as an optical material of various shapes by changing the mold used for casting polymerization. It is possible to make the optical material of the present embodiment into various shapes by making the desired shape and providing a coating layer, other members, and the like, formed as necessary.

The photochromic lens obtained by curing the polymerizable composition of the present embodiment may be used with a coating layer on one surface or both surfaces, as necessary. Examples of coating layers include hard coat layers, anti-reflective layers, anti-fog coating film layers, anti-contamination layers, water repellent layers, primer layers, photochromic layers, and the like. It is also possible to use each of these coating layers alone or as a multi-layer with a plurality of coating layers. In a case where coating layers are applied to both surfaces, similar coating layers or different coating layers may be applied to each side.

In a case where the optical material of the present embodiment is applied to eyeglass lenses, it is possible to provide a hard coating layer and/or an anti-reflective coating layer formed on at least one of the surfaces of the optical material (lens) obtained by curing the polymerizable composition of the present embodiment. Furthermore, it is also possible to provide other layers as described above. The eyeglass lens obtained in this manner uses a lens formed of a specific polymerizable composition and thus has excellent impact resistance even in a case of being provided with these coating layers .

Embodiments of the present invention were described above; however, these are examples of the present invention and it is possible to adopt various configurations other than the above in a range in which the effects of the present invention are not impaired.

### [Example 1]

Next, a more detailed description will be given of the present invention using Examples, but the present invention is not limited in any way by these Examples. In the Examples and Comparative Examples, the method used for evaluation and the apparatuses used are as follows.

### (a) Light transmittance (T% max) during color development, CIE color coordinates (a*, b*) :

Using a xenon lamp light source apparatus, a 2.0 mm-thick molded product sample was irradiated and color-developed for 15 minutes under conditions of a temperature of 23°C and an illuminance of 50,000 lux, during which the spectrum was continuously measured. From the spectrum after 15 minutes of irradiation, the light transmittance (T% max) at the maximum absorption wavelength (λmax) at this time was determined. A lower transmittance represents darker color-development.

In addition, the color coordinates of the darkening process and fading process were determined from the spectral data at each time point and the changes in color tone were evaluated. The changes in the color coordinates of the darkening process and fading process being linear and the variation from the linear line being small represent that the color tone change was small and the color tone was stable.

### (b) Fading Half-Life (F1/2):

After the 15 minutes of color-development, the spectrum was measured continuously for another 15 minutes after the light irradiation was stopped. From the spectral data, the time required for the absorbance of the molded product sample at λmax to return to the mid-value of absorbance before and after darkening is determined and this is defined as the fading half-life (F1/2). A shorter time represents a faster fading speed.
· Light source apparatus: MS-35AAF/FB, Ushio Inc.
· Lamp: Xenon lamp UXL-300SX2 by Ushio Inc.
· Spectrometer: MSPD-7700 instantaneous multi-photometry system, Otsuka Electronics Co., Ltd.

Reversacol 1920 (manufactured by Vivimed, PC1 (chromophore) in General Formula (a): Structure 1 represented by General Formula c, Chain: None)

Reversacol Wembley Grey (manufactured by Vivimed, PC1 (chromophore) in General Formula (a): Structure 1 represented by General Formula c, Chain: polyoxyalkylene chain)

Reversacol Heath Green (manufactured by Vivimed, PC1 (chromophore) in General Formula (a): Structure 2 represented by General Formula c, Chain: polyoxyalkylene chain)

### (Evaluation 1 of Darkening Performance of Photochromic Compound)

As photochromic compounds, 0.0500 parts by weight of each of Reversacol 1920, Reversacol Wembley Grey, and Reversacol Heath Green were weighed out into appropriate containers. To the above, 49.8 parts by weight of a mixture of 2,5-bis(isocyanatomethyl)-bicycle[2.2.1]heptane and 2,6-bis(isocyanatomethyl)-bicyclo[2.2.1]heptane were added and dissolved by stirring. Furthermore, to these solutions, 0.30 parts by weight of JP-506H manufactured by Johoku Chemical Co.,Ltd. and 2.4 parts by weight of Adeka Pluronic L-64 manufactured by Adeka Corporation, each as acid phosphate esters, and 0.075 parts by weight of HOSTAVIN PR-25 as an ultraviolet absorber were added and dissolved by stirring. To this mixture, 23.3 parts by weight of pentaerythritol tetrakis(3-mercaptopropionate) and 24.9 parts by weight of 4-mercaptomethyl-1,8-dimercapto-3,6-dithiaoctane were added and stirred and then 0.040 parts by weight of dimethyltin dichloride were added thereto and dissolved uniformly. The above were degassed at 5 mmHg for 60 minutes and filtered through a 1 µm filter made of PTFE and each solution was individually injected into a mold formed of a glass mold and tape. After these molds were introduced into an oven, the temperature was gradually increased from 30°C to 120°C over 23 hours to carry out polymerization. After the polymerization was completed, the molds were taken out from the oven and released to obtain 2 mm-thick resin plates including 500 ppm of each dye. These obtained resin plates were further annealed at 120°C for 1 hour. By measuring the spectra of the resin plates obtained in this manner in the darkening and fading processes, the light transmittance (T% max) at the time of darkening and the fading half-life (F1/2) of each photochromic compound were determined. The results of these evaluations are summarized in Table-1.

### [Table 1]

**[Table-1]**

| | Chromophore | ppm | λmax | T% max | F1/2 (sec) |
|---|---|---|---|---|---|
| Reversacol Wembley Grey | Structure 1 of General Formula c | 500 | 565 | 21.1 | 38 |
| Reversacol 1920 | Structure 1 of General Formula c | 500 | 565 | 48. 0 | 73 |
| Reversacol Heath Green | Structure 2 of General Formula c | 500 | 450 | 14.1 | 56 |

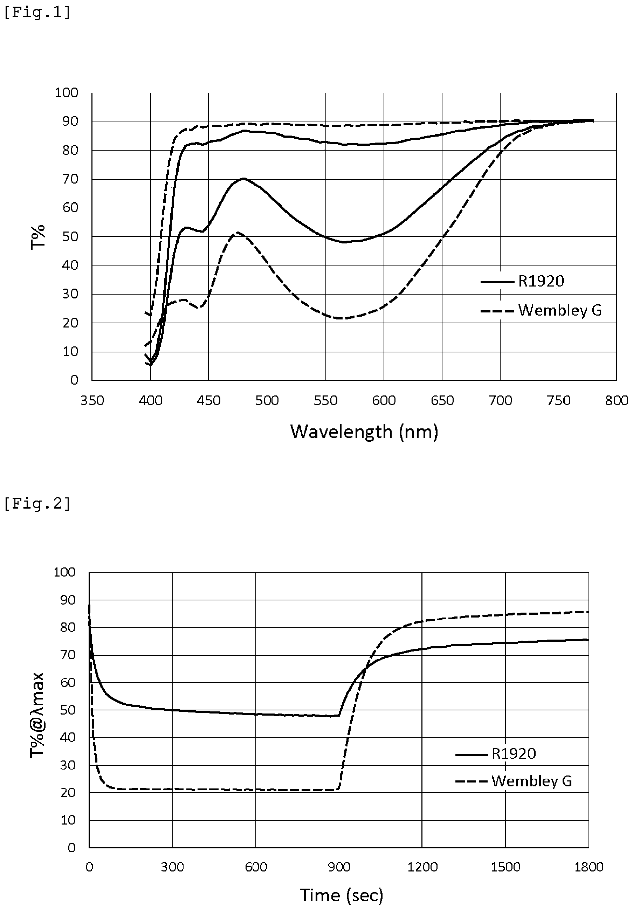

As illustrated in Table-1, the T% max's of Reversacol Wembley Grey and Reversacol Heath Green were 21.1% and 14.1%, respectively, and the T% max of Reversacol 1920 was slightly higher at 48.0%, but each exhibited effective color-development due to the light irradiation. In addition, as shown in Fig. 1, for compounds in which the chromophores were identical (Reversacol Wembley Grey and Reversacol 1920), although the light transmittance T% at the time of color-development was different, the spectral shapes matched and the color-development was carried out with identical color tones. As shown in Table-1, even among compounds having identical chromophores and being color-developed with identical color tones, the compound having a chain (Reversacol Wembley Grey) had a shorter fading half-life (F1/2) and faster darkening and fading speeds than the compounds not having a chain (Reversacol 1920). Fig. 2 shows the darkening and fading speeds of these photochromic pigments. From these results, it was found that in a case where compounds having identical chromophores and being color-developed with identical color tones are mixed, it is possible to adjust the darkening and fading speeds while maintaining the identical color tones in the color-development by changing the mixing ratio thereof.

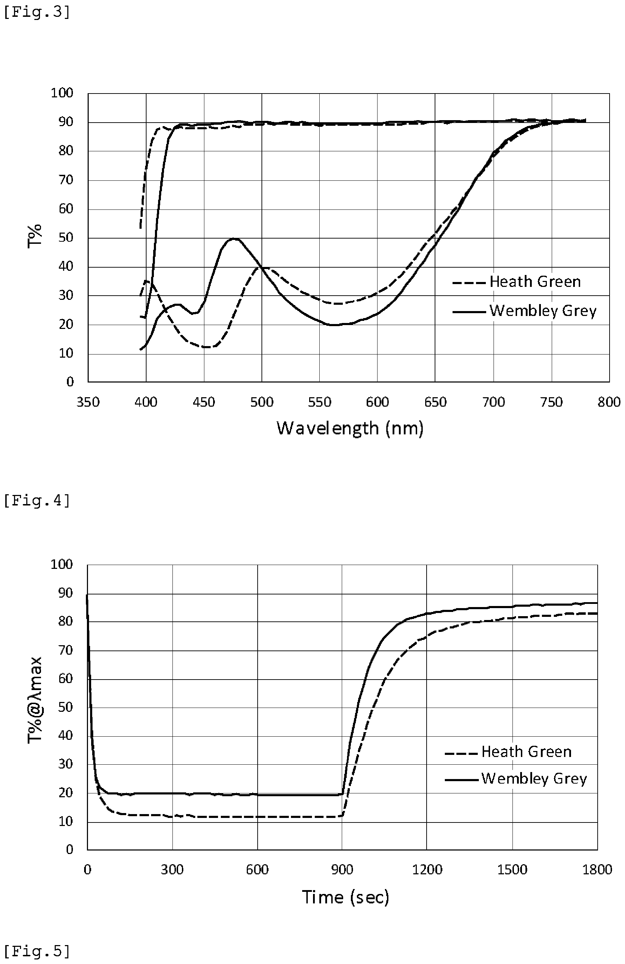

On the other hand, as shown in Fig. 3, compounds with different chromophores (Reversacol Heath Green and Wembley Grey) had different darkening spectra and were color-developed with different color tones. As shown in Table-1, these compounds having different chromophores also had different darkening and fading speeds. Fig. 4 shows the darkening and fading speeds of these photochromic pigments. From these results, it is understood that even with photochromic pigments carrying out the darkening with different color tones, when the fading half-life (F1/2) of a group of compounds having identical chromophores (a group of photochromic pigments undergoing color-development with identical color tones) is adjusted and the fading half-lives of the compound groups are approximately identical to each other, the darkening and fading speeds will be approximately constant and color deviation is suppressed and thus it is possible to keep the color tones constant in the darkening and fading processes .

### [Example 1]

### (Adjustment of Darkening and Fading Speed in Composition (Pigment) in which Photochromic Compounds including Identical Chromophores are Mixed)

Resin plates were prepared in the same manner as in "Evaluation 1 of Darkening Performance of Photochromic Compound" using a composition (pigment) in which Reversacol Wembley Grey having a chain and Reversacol 1920 not having a chain, which are photochromic compounds including identical chromophores, were mixed at the ratios of Table-2 such that the total amount thereof was 0.0500 parts by weight.

The light transmittance (T% max) at the time of darkening and fading half-life (F1/2) of the photochromic compound mixed composition were determined by measuring the spectrum of the darkening and fading process of the obtained resin plates. These results are shown in Table-2 and the graph of Fig. 5 shows the relationship between the amount of Reversacol Wembley Grey and the fading half-life (F1/2) at a total of 500 ppm.

### [Table 2]

**[Table-2]**

| | ppm | λmax | T% max | F1/2 (sec) |
|---|---|---|---|---|
| Reversacol Wembley Grey/1920 | 100/400 | 565 | 40.3 | 57 |
| | 200/300 | 565 | 34.3 | 47 |
| | 300/200 | 565 | 29.1 | 45 |
| | 400/100 | 565 | 24.1 | 43 |

As shown in Table-1, in photochromic compounds having identical chromophores, the fading half-life (F1/2) of the photochromic compound (Reversacol Wembley Grey) having a chain is shorter than the fading half-life of the photochromic compound (Reversacol 1920) not having a chain. From the results in Table-2 and Fig. 5, it is understood that, in the compositions with a mixture of both the above, as the composition ratio of Reversacol Wembley Grey is increased, the fading half-life is shortened. Accordingly, it was inferred that, by adjusting the mixing ratio of both, it is possible to arbitrarily set the fading half-life within the range of both values.

### [Example 2]

(Adjustment of Darkening and Fading Speeds in Composition (Pigment) in which Photochromic Compounds including Different Chromophores are Mixed)

Resin plates were prepared in the same manner as in "Evaluation 1 of Darkening Performance of Photochromic Compound" except that as photochromic compounds including different chromophores,
(1) a mixed composition of Reversacol Heath Green and Reversacol Wembley Grey,
(2) a mixed composition of Reversacol Heath Green and Reversacol 1920, and
(3) a mixed composition of Reversacol Heath Green, Reversacol Wembley Grey, and Reversacol 1920,
   were used at the mixing ratios in Table-3.

### [Table 3]

**[Table-3]**

| | | ppm | µmax | T% max | F1/2 (sec) |
|---|---|---|---|---|---|
| Reversacol Wembley Grey/Heath Green | Mixed composition (1) | 610/500 | 565 | 15.7 | 41 |
| Reversacol 1920/H Green | Mixed composition (2) | 1295/500 | 565 | 32.1 | 63 |
| Reversacol W Gray/1920/H Green | Mixed composition (3) | 210/840/500 | 565 | 28.8 | 56 |

From the results of Table-1, the fading half-life (F1/2) of Reversacol Heath Green is 56 seconds, the fading half-life (F1/2) of Reversacol Wembley Grey is 38 seconds, and the fading half-life (F1/2) of Reversacol 1920 is 73 seconds.

Even when photochromic compounds of one type with different chromophores with each other are mixed, as in the mixed compositions (1) and (2) listed in Table-3, it was not possible to match the fading half-lives (F1/2) and thus color deviation was generated.

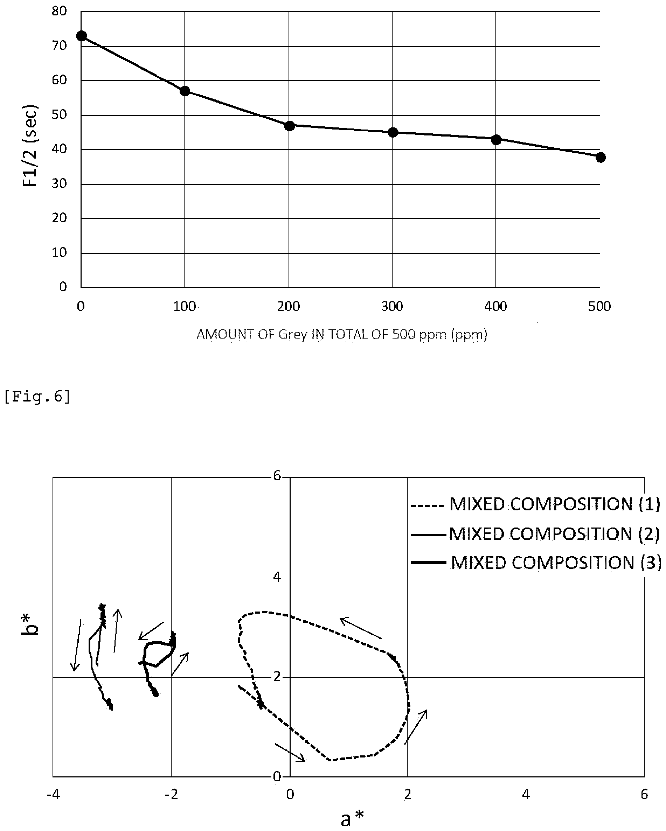

From Table-2 and Fig. 5, by setting the weight ratio of Reversacol Wembley Grey and Reversacol 1920, which are photochromic compounds including identical chromophores, to be close to 1:4 (210 ppm: 840 ppm), it is possible to set the fading half-life (F1/2) of the compound group to 57 seconds, thus, it is possible to roughly match the 56 seconds of the fading half-life (F1/2) of Reversacol Heath Green. Therefore, a composition (mixed composition 3) was set in which "Reversacol Wembley Grey 610 ppm" in the mixed composition (1) was replaced with "a combination (pigment group) of Reversacol Wembley Grey 210 ppm and Reversacol 1920 840 ppm (total 1050 ppm)" and the color coordinates of the darkening process and the fading process were determined to evaluate changes in the color tone. Fig. 6 shows the color coordinate changes of the three types of mixed compositions at this time.

It is understood that, in the two-type mixed composition (mixed composition (1)) of Reversacol Heath Green and Reversacol Wembley Grey, changes occur so as to draw a left-rotating loop on the color coordinates during the darkening and erasing processes. In this example, upon visual observation after undergoing darkening to a gray color, the color-development of Reversacol Heath Green, for which the speed in the fading process is slow, remained, thus, a pale greenish color tone remained.

On the other hand, in the two-type mixed composition (mixed composition (2)) of Reversacol Heath Green and Reversacol 1920, it is understood that the changes do not draw a loop in the color coordinates during the darkening and erasing process, but color deviation to the upper side of the coordinates (yellow direction) occurs during the darkening process and then returns, while color deviation to the lower side of the coordinates (blue direction) occurs in the opposite manner during the fading process and then returns. In this example, after the darkening, the color-development of Reversacol 1920, for which the speed in the fading process is slow, remained, thus, a bluish color tone remained.

In contrast thereto, in a composition (mixed composition (3)) setting the Reversacol Wembley Grey and Reversacol 1920 in specific composition ratios to adjust the darkening and erasing speed and combining the result with Reversacol Heath Green, the change in coordinates during the darkening and erasing process is clearly smaller than that of the mixed compositions (1) and (2). This indicates that changes occurred while maintaining the color tone during the darkening and erasing process and also that no color deviation was perceived upon visual observation.

In this manner, even in a mixed composition of photochromic compounds that include different chromophores and have different fading half-lives (F1/2), it is possible to minimize the color deviation in the darkening and fading processes by adding a photochromic compound that has a chromophore identical to one of the chromophores but has a different fading half-life (F1/2) to make a mixture (compound group), and adjusting the fading half-life of the mixture to match the fading half-life of the photochromic compound (or mixture) having the other chromophore.

This application claims priority based on Japanese Application No. 2020-145860, filed on August 31, 2020, the entire disclosure of which is incorporated herein.

The present invention may also take the following aspects.
[a1] A polymerizable composition for an optical material including a photochromic pigment including at least two types of photochromic compounds having identical chromophores in the structures thereof, and
a polymerizable compound.
[a2] The polymerizable composition for an optical material according to [a1], in which the photochromic compound is at least two types of compounds selected from compounds represented by General Formula (a) .

   (Chain)a-[(L)b-(PC1)]c (a)

(In General Formula (a), a and b are both 0 or 1. c is equal to the number of bonding sites of Chain.

PC1 indicates a chromophore derived from any compound of General Formulae (c) to (f) .

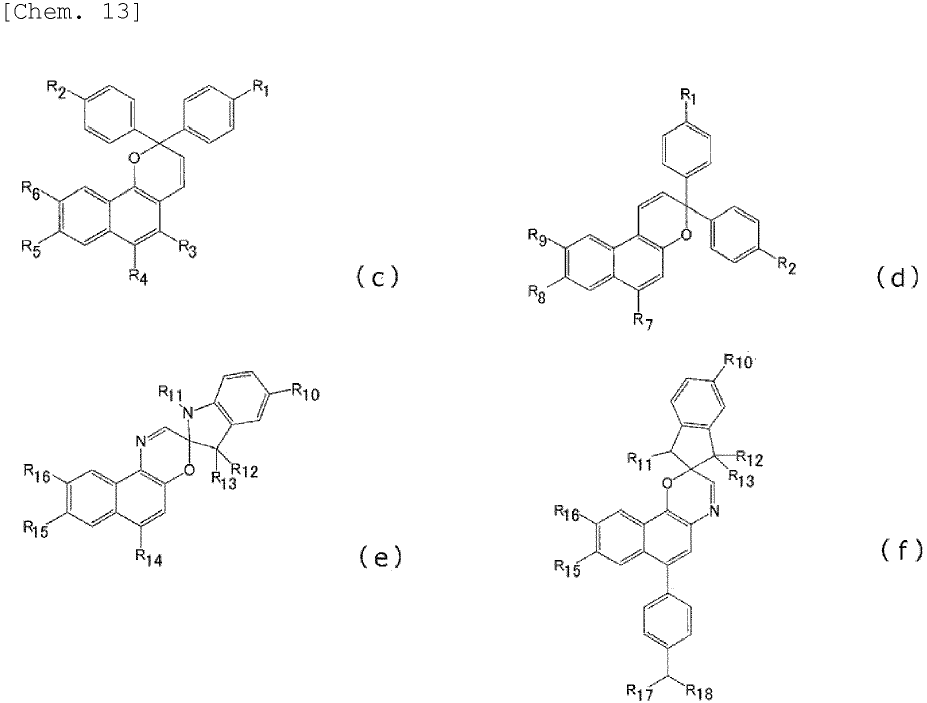

In General Formulae (c) to (f), R¹ to R¹⁸, which may be identical to or different from each other, indicate hydrogen, a halogen atom, a carboxyl group, an acetyl group, a formyl group, a C1 to C20 aliphatic group which may be substituted, a C3 to C20 alicyclic group which may be substituted, or a C6 to C20 aromatic organic group which may be substituted. These aliphatic groups, alicyclic groups, or aromatic organic groups may include an oxygen atom and a nitrogen atom. Any one of the groups included in the compounds represented by General Formulae (c) to (f) is bonded to L, which is a divalent organic group. L indicates a divalent organic group including one or more types selected from an oxyethylene chain, an oxypropylene chain, a (thio) ester group, and a (thio) amide group. Chain indicates a monovalent or a divalent organic group including one or more types selected from a polysiloxane chain and a polyoxyalkylene chain.)
[a3] A polymerizable composition for an optical material including
a photochromic pigment including a group formed of one or two or more types of photochromic compounds having identical chromophores in the structures thereof, and at least one group formed of two or more types of photochromic compounds having identical chromophores in the structures thereof for each of at least one type of chromophore which is different from the chromophore, and
a polymerizable compound,
in which the fading half-lives calculated for each of all of the groups forming the photochromic pigment are approximately identical.
[a4] The polymerizable composition for an optical material according to [a3], in which
the photochromic pigment includes
a group a formed of one or two or more types of photochromic compounds having identical chromophores a in the structures thereof, and
a group b formed of two or more types of photochromic compounds having identical chromophores b different from the chromophore a in the structures thereof, in which
the calculated fading half-lives of the group a and the group b are approximately identical.
[a5] The polymerizable composition for an optical material according to [a4], in which
the group a is one or two or more types of photochromic compounds selected from compounds represented by General Formula (a) or (b), and
the group b is two or more types of photochromic compounds selected from compounds represented by the other General Formula.

   (Chain)a-[(L)b-(PC1)]c (a)

   (Chain)a-[(L)b-(PC2)]c (b)

(In General Formula (a) or (b), both a and b are 0 or 1. c is equal to the number of bonding sites of Chain.

PC1 and PC2 indicate chromophores derived from compounds of any of General Formulae (c) to (f) . PC1 and PC2 are different.)

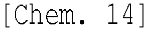

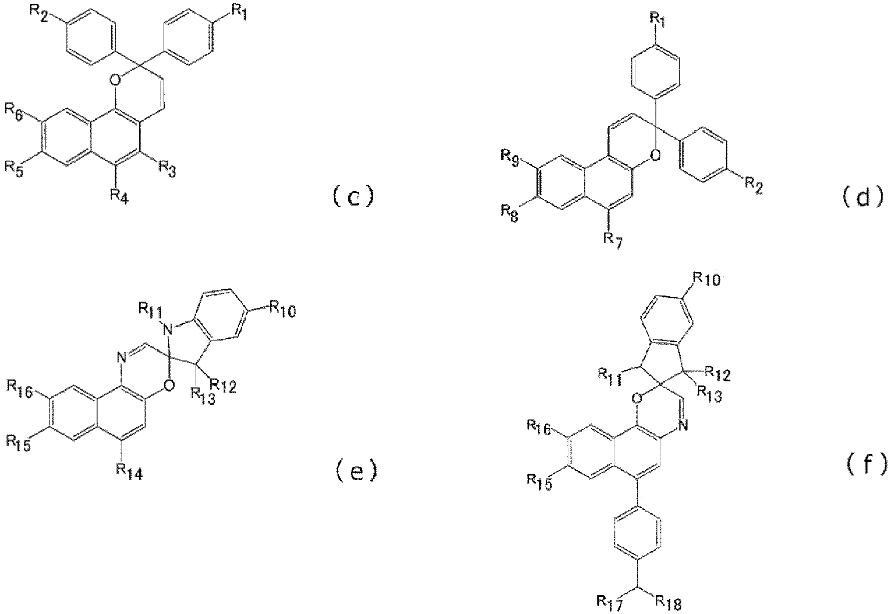

(In General Formulae (c) to (f), R¹ to R¹⁸, which may be identical to or different from each other, indicate hydrogen, a halogen atom, a carboxyl group, an acetyl group, a formyl group, a C1 to C20 aliphatic group which may be substituted, a C3 to C20 alicyclic group which may be substituted, or a C6 to C20 aromatic organic group which may be substituted. These aliphatic groups, alicyclic groups, or aromatic organic groups may include an oxygen atom and a nitrogen atom. Any one of the groups included in the compounds represented by General Formulae (c) to (f) is bonded to L, which is a divalent organic group. L indicates a divalent organic group including one or more types selected from an oxyethylene chain, an oxypropylene chain, a (thio) ester group, and a (thio) amide group. Chain indicates a monovalent or a divalent organic group including one or more types selected from a polysiloxane chain and a polyoxyalkylene chain.)
[a6] The polymerizable composition for an optical material according to any of [a1] to [a5], in which the polymerizable compound includes a bi- or higher functional iso(thio)cyanate compound and a bi- or higher functional active hydrogen compound.
[a7] The polymerizable composition for an optical material according to [a6], in which the iso (thio) cyanate compound is at least one type selected from the group consisting of hexamethylene diisocyanate, pentamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, phenylene diisocyanate, and 4,4'-diphenylmethane diisocyanate.
[a8] The polymerizable composition for an optical material according to [a6] or [a7], in which the active hydrogen compound is a bi- or higher functional polythiol compound and/or a bi- or higher functional polyol compound.
[a9] The polymerizable composition for an optical material according to [a8], in which the polythiol compound is at least one type selected from the group consisting of pentaerythritol tetrakis(2-mercaptoacetate), pentaerythritol tetrakis(3-mercaptopropionate), bis(2-mercaptoethyl) sulfide, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 2,5-dimercaptomethyl-1,4-dithiane, 1,1,3,3-tetrakis(mercaptomethylthio)propane, 4,6-bis(mercaptomethylthio)-1,3-dithiane, 2-(2,2-bis(mercaptomethylthio)ethyl-1,3-dithiethane, and ethylene glycol bis(3-mercaptopropionate).
[a10] A molded product formed by curing the polymerizable composition for an optical material according to any of [a1] to [a9] .
[a11] An optical material formed of the molded product according to [a10].
[a12] A photochromic lens formed of the molded product according to [a10].
[a13] A method for producing a polymerizable composition for an optical material, the method including
a step of selecting a plurality of photochromic compounds having identical chromophores in the structures thereof,
a step of selecting two or more types of photochromic compounds from among the plurality of selected photochromic compounds to achieve a desired color tone, and
a step of mixing the two or more types of photochromic compounds with a polymerizable compound to be a predetermined ratio.
[a14] The method for producing a polymerizable composition for an optical material according to [a13], the method further including
a step of acquiring a fading half-life of two or more types of the photochromic compounds in a desired resin, and
a step of adjusting the ratio of the two or more types of photochromic compounds to adjust the fading half-life of the two or more types of photochromic compounds in a mixed state after the step of selecting photochromic compounds.
[a15] A method for producing a polymerizable composition for an optical material, the method including
a step of selecting a plurality of photochromic compounds having different chromophores in the structures thereof,
a step of selecting three or more types of photochromic compounds from among the plurality of selected photochromic compounds to achieve a desired color tone,
a step of acquiring a fading half-life of the three or more types of photochromic compounds in a desired resin,
a step of classifying the three or more types of photochromic compounds into a group formed of one or two or more types of photochromic compounds having identical chromophores in the structures thereof, and at least one group formed of two or more types of photochromic compounds having identical chromophores in the structures thereof for each of at least one type of chromophore different from the chromophore,
a step of adjusting the fading half-lives calculated for each of all of the groups to be approximately identical,
a step of adjusting the ratio of the photochromic compound groups in order to adjust the color tone in a state where all the photochromic compound groups are mixed together, and
a step of mixing the photochromic compound groups with a polymerizable compound to achieve the ratio.

## Claims

1. A polymerizable composition for an optical material comprising:
a photochromic composition (A); and
a polymerizable composition (B) including a bi- or higher functional iso (thio) cyanate compound and a bi- or higher functional active hydrogen compound,
wherein the photochromic composition (A) is a composition including at least three types of photochromic compounds (i) to (iii),
the photochromic compound (i) has a structure including a chromophore a and a monovalent or a divalent organic group including one or more types of a polysiloxane chain or a polyoxyalkylene chain,
the photochromic compound (ii) has the chromophore a (which is not the photochromic compound (i)), and
the photochromic compound (iii) has a chromophore b different from the chromophore a.

2. The composition for an optical material according to claim 1, wherein the photochromic compound (ii) and/or the photochromic compound (iii) further has a structure including a monovalent or a divalent organic group including one or more types of a polysiloxane chain or a polyoxyalkylene chain.

3. The polymerizable composition for an optical material according to claim 1 or claim 2,
wherein the photochromic compounds (i) to (iii) are one or two or more types of compounds selected from compounds represented by General Formula (a),
the photochromic compound (i) is a compound in which a and b are 1 in General Formula (a), and
the photochromic compound (ii) or the photochromic compound (iii) is a compound in which a and b are both 0 or 1 in General Formula (a),
(Chain)a-[(L)b-(PC1)]c (a)
wherein in General Formula (a), a and b are both 0 or 1, c is equal to the number of bonding sites of Chain, and
PC1 indicates a chromophore derived from any compound of General Formulae (c) to (f), 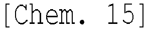 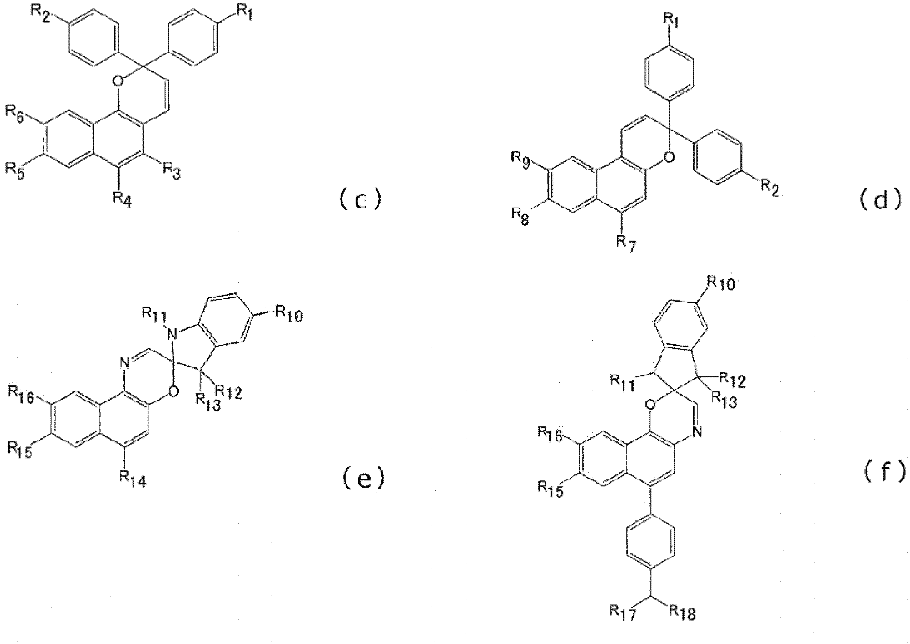
wherein in General Formulae (c) to (f), R¹ to R¹⁸, which may be identical to or different from each other, indicate hydrogen, a halogen atom, a carboxyl group, an acetyl group, a formyl group, an aliphatic group with 1 to 20 carbon atoms which may be substituted, an alicyclic group with 3 to 20 carbon atoms which may be substituted, or an aromatic organic group with 6 to 20 carbon atoms which may be substituted, these aliphatic groups, alicyclic groups, or aromatic organic groups may include an oxygen atom and a nitrogen atom, any one of the groups included in the compounds represented by General Formulae (c) to (f) is bonded to L, which is a divalent organic group, L indicates a divalent organic group including one or more types selected from an oxyethylene chain, an oxypropylene chain, a (thio)ester group, and a (thio)amide group, and Chain indicates a monovalent or a divalent organic group including one or more types selected from a polysiloxane chain and a polyoxyalkylene chain.

4. The polymerizable composition for an optical material according to any one of claims 1 to 3, further comprising:
a polyether compound (C) with a number-average molecular weight of 100 to 10000.

5. The polymerizable composition for an optical material according to any one of claims 1 to 4,
wherein the bi- or higher functional iso (thio) cyanate compound is at least one type selected from the group consisting of hexamethylene diisocyanate, pentamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, phenylene diisocyanate, and 4,4'-diphenylmethane diisocyanate.

6. The polymerizable composition for an optical material according to any one of claims 1 to 5,
wherein the bi- or higher functional active hydrogen compound is a bi- or higher functional polythiol compound and/or a bi- or higher functional polyol compound.

7. The polymerizable composition for an optical material according to claim 6,
wherein the bi- or higher functional polythiol compound is at least one type selected from the group consisting of pentaerythritol tetrakis(2-mercaptoacetate), pentaerythritol tetrakis(3-mercaptopropionate), bis(2-mercaptoethyl) sulfide, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 2,5-dimercaptomethyl-1,4-dithiane, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, and ethylene glycol bis(3-mercaptopropionate).

8. A molded product formed by curing the polymerizable composition for an optical material according to any one of claims 1 to 7.

9. An optical material consists of the molded product according to claim 8.

10. A photochromic lens consists of the molded product according to claim 8.

11. A method for producing a polymerizable composition for an optical material, the method comprising:
a step of mixing a photochromic composition (A) and a polymerizable composition (B) including a bi- or higher functional iso(thio)cyanate compound and a bi- or higher functional active hydrogen compound,
wherein the photochromic composition (A) includes
a photochromic compound (i) having a structure including a chromophore a and a monovalent or a divalent organic group including one or more types of a polysiloxane chain or a polyoxyalkylene chain,
a photochromic compound (ii) having the chromophore a (which is not the photochromic compound (i)), and
a photochromic compound (iii) having a chromophore b different from the chromophore a.

12. The method for producing a polymerizable composition for an optical material according to claim 11, the method further comprising:
a step of adjusting a darkening and erasing speed of a mixture of the photochromic compound (i) and the photochromic compound (ii) and a darkening and erasing speed of the photochromic compound (iii) to be approximately identical, before the mixing step.

13. The method for producing a polymerizable composition for an optical material according to claim 12,
wherein the adjusting step is performed by adjusting a mixing ratio of the mixture of the photochromic compound (i) and the photochromic compound (ii).

14. A method for suppressing color deviation of a polymerizable composition for an optical material, the composition comprising a photochromic composition (A), and a polymerizable composition (B) including a bi- or higher functional iso(thio)cyanate compound and a bi- or higher functional active hydrogen compound, in which the photochromic composition (A) is a composition including at least three types of photochromic compounds (i) to (iii), the photochromic compound (i) has a structure including a chromophore a and a monovalent or a divalent organic group including one or more types of a polysiloxane chain or a polyoxyalkylene chain, the photochromic compound (ii) has the chromophore a (which is not the photochromic compound (i)), and the photochromic compound (iii) has a chromophore b different from the chromophore a, the method comprising:
a step of adjusting a darkening and erasing speed of a mixture of the photochromic compound (i) and the photochromic compound (ii) and a darkening and erasing speed of the photochromic compound (iii) to be approximately identical.
